Europäisches Patentamt

**European Patent Office**

**Office européen des brevets**

(19)

(11) **EP 0 667 545 B1**

(12) **EUROPÄISCHE PATENTSCHRIFT**

(45) Veröffentlichungstag und Bekanntmachung des Hinweises auf die Patenterteilung:
**03.07.2002 Patentblatt 2002/27**

(51) Int Cl.7: **G02B 6/42**, G02B 6/30

(21) Anmeldenummer: **94116979.9**

(22) Anmeldetag: **27.10.1994**

(54) **Anordnung zur Anpassung unterschiedlicher Feldverteilungen von Lichtstrahlen**

Device for matching the different field distributions of light beams

Dispositif pour adapter différentes distributions de champs de faisceaux lumineux

(84) Benannte Vertragsstaaten:
**ES FR GB IT NL**

(30) Priorität: **12.02.1994 DE 4404525**

(43) Veröffentlichungstag der Anmeldung:
**16.08.1995 Patentblatt 1995/33**

(73) Patentinhaber: **ROBERT BOSCH GMBH**
**70442 Stuttgart (DE)**

(72) Erfinder:
• **Kuke, Albrecht, Dr.**
**D-71549 Auenwald (DE)**
• **Fritscher, Raimund**
**D-71576 Burgstetten (DE)**
• **Möss, Eberhard**
**D-71540 Murrhardt (DE)**
• **Hauer, Heiner**
**D-70734 Fellbach (DE)**

(74) Vertreter: **Gleiss & Grosse**
**Maybachstrasse 6 A**
**70469 Stuttgart (DE)**

(56) Entgegenhaltungen:
**EP-A- 0 392 852** **EP-A- 0 542 011**
**US-A- 3 894 789** **US-A- 4 333 173**
**US-A- 4 575 194**

• **OPTICS LETTERS., Bd.13, Nr.5, Mai 1988, NEW YORK US Seiten 425 - 427 B.E.KINCAID 'Coupling of polarization-maintaining fibers to Ti:LiNbO3 WAVEGUIDES WITH ANGLED INTERFACES'**
• **PATENT ABSTRACTS OF JAPAN vol. 6, no. 258 (P-163) (1136) 17. Dezember 1982 & JP-A-57 155 524 (FUJITSU)**

**Beschreibung**

Die Erfindung betrifft eine Anordnung zur Anpassung unterschiedlicher Feldverteilungen von Lichtstrahlen bei der Ankopplung verschiedener optischer Komponenten aneinander nach dem Oberbegriff des Patentanspruches 1.

Zur Ankopplung eines Halbleiterlasers an eine Einmodenfaser ist eine abbildende Koppeloptik erforderlich, da üblicherweise die Feldverteilung eines Lasers nicht mit der Feldverteilung der Faser übereinstimmt. Eine Einmodenfaser hat üblicherweise ein nahezu gaußförmiges Modenfeld mit einem Radius von ca. 4,5 μm und zirkularer Symmetrie. Ein Halbleiterlaser hat typischerweise ein elliptisches Modenfeld mit einer großen Halbachse in der Ebene der Epitaxie-Schichten von ca. 2 μm und einer kleinen Halbachse von ca. 0,5 μm. Eine optimale Verkopplung zweier Gaußstrahlen findet dann statt, wenn das Überlappungsintegral der Feldverteilungen ein Maximum bzw. im Idealfall den Wert 1 erreicht. Da das Modenfeld des Lasers wesentlich kleiner als das der Faser ist, muß es zur Erzielung eines hohen Koppelwirkungsgrades über eine Optik auf die Größe des Modenfeldes der Faser vergrößert werden. Nach dem Stand der Technik werden zur Abbildung in die Faser integrierte Linsen wie zum Beispiel Taperlinsen oder separate Linsen wie zum Beispiel Kugellinsen oder asphärische Linsen verwendet. Diese Linsen sind mit verhältnismäßig geringem Aufwand nur in rotationssymmetrischer Form herstellbar. Bei Lasern, die eine rotationssymmetrische Feldverteilung haben, lassen sich auf diese Weise auch sehr hohe Kopplungsgrade erzielen, wenn das optimale Vergrößerungsverhältnis gewählt wird. Muß jedoch ein Laser mit einem stark elliptischen Fernfeld verwendet werden, so lassen sich die Modenfelder des Lasers und der Faser mit einer rotationssymmetrischen Optik nicht vollständig aufeinander abbilden, wodurch der maximal erreichbare Koppelwirkungsgrad begrenzt wird. Wollte man das elliptische Modenfeld eines Halbleiterlasers auf das zirkulare Modenfeld einer Faser abbilden, so bräuchte man eine Abbildungslinse mit einer zylindrischen Komponente, um für die beiden Halbachsen des Lasermodenfeldes unterschiedliche Vergrößerungen zu erreichen. Eine solche Linse ist aber in den erforderlichen Mikroabmessungen nach dem Stand der Technik nur sehr schwer und mit großem Aufwand herstellbar.

Aus der EP 308 604 A1 ist eine Koppeloptik zum Einkoppeln des von einem Halbleiterlaser ausgesandten Laserlichts in einen optischen Wellenleiter bekannt. Es sollen ein hoher Koppelwirkungsgrad und eine hohe Rückstreudämpfung erreicht werden. Dazu werden Hohlspiegel zwischen Laser und Wellenleiter eingesetzt. Zudem wird vorgeschlagen, die Endfläche des Wellenleiters abzuschrägen, um eine Rückreflexion von Licht in den Laser zu vermeiden. Es wird darauf hingewiesen, daß die schräge Anordnung der Endfläche zur Anpassung des Laserstrahls mit elliptischem Querschnitt an den rotationssymmetrischen Wellenleitermodus genutzt werden kann. Eine Angabe dazu, wie dies erfolgen kann, ist obiger Veröffentlichung jedoch nicht zu entnehmen. Gleiches gilt für EP 0 542 011 A1, in der eine Anordnung nach dem Oberbegriff des Anspruchs 1 beschrieben ist.

Aus EP 0 392 852 A1 und US 4 333 172 sind Anordnungen zum Umwandeln eines nichtkreisförmigen Strahlprofils in ein kreisförmiges Strahlprofil für die optische Abtastung eines Datenträgers bekannt.

Es ist Aufgabe der Erfindung, eine Anordnung zur Anpassung unterschiedlicher Feldverteilungen anzugeben, mit der eine Abbildung eines ersten elliptischen Modenfeldes auf ein zweites elliptisches Modenfeld mit einem anderen Halbachsenverhältnis durchgeführt werden kann.

Die Aufgabe wird durch eine Anordnung mit den Merkmalen des Patentanspruches 1 gelöst. Vorteilhafte Weiterbildungen sind den Unteransprüchen zu entnehmen.

Eine Anpassung der Feldverteilungen kann notwendig sein zwischen Faser - Streifenleiter, Laser - Faser, Laser - Streifenleiter, Photodiode - Streifenleiter, etc.

Ein Ausführungsbeispiel der Erfindung wird anhand der Zeichnungen erläutert.

Es zeigen:

Figur 1 Prinzipskizze einer abgeschrägten Faser,

Figur 2 bis 5 Querschnitte durch verschiedene Modenfelder.

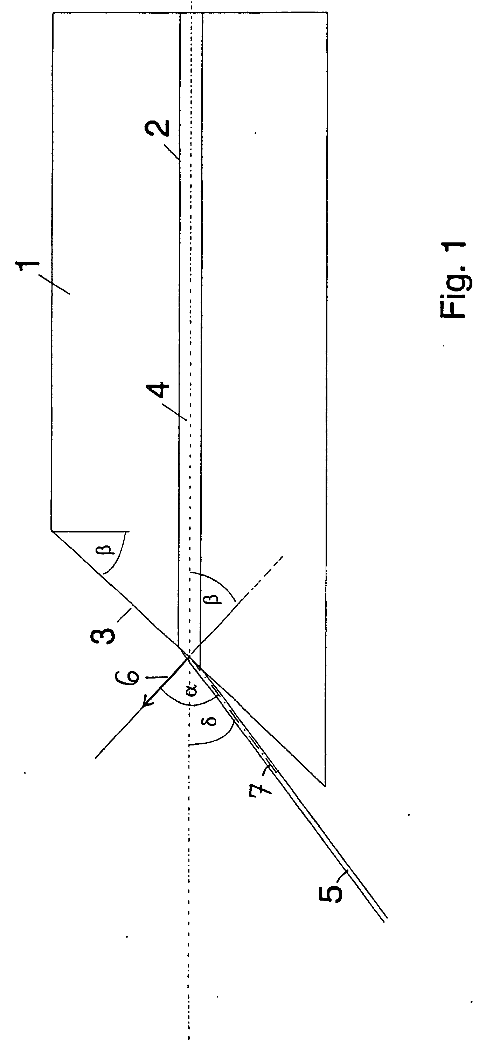

Der Grundgedanke der erfindungsgemäßen Lösung ist in Figur 1 skizziert. Ein Lichtwellenleiter 1 mit einem Kern 2 und einer Längsachse 4, in den Licht eingekoppelt werden soll, besitzt eine Endfläche 3, die unter einem Winkel B abgeschrägt ist. Zur Verdeutlichung der Strahlumwandlung an der Faserstirnfläche wird ein Parallelstrahl betrachtet, der aus der Faser austritt und an der schrägen Stirnfläche gebrochen wird. Diese Annahme bedeutet keine Einschränkung der Allgemeinheit der Überlegung, da der Lichtweg umkehrbar und die Ergebnisse daher auch auf einen in den Lichtwellenleiter eintretenden Strahl gelten. Ein aus einer Einmodenfaser austretender Gaußstrahl hat seine Strahltaille an der Austrittsfläche. Im Bereich der Strahltaille hat ein Gaußstrahl ebene Wellen, so daß im Bereich der Strahltaille die Annahme eines Parallelstrahls gerechtfertigt ist. Das im Kern 2 des Lichtwellenleiters geführte Lichtbündel hat im Falle eines rotationssymmetrischen Kerns das Achsenverhältnis $V_k = 1$. Bei einem Streifenwellenleiter kann das Achsenverhältnis von 1 abweichen. An der schrägen Endfläche 3 wird das Licht in das Bündel 5 gebrochen. Nach dem Snelliusschen Brechungsgesetz gilt:

$$\sin \alpha / \sin \beta = n \qquad (1)$$

wobei der Einfallswinkel $\beta$ im Innern des Wellenleiters gleich dem Schnittwinkel der Endfläche ist. Der Winkel $\alpha$ ist der Brechungswinkel zwischen der Flächennormalen und dem Strahl im Außenraum. Der Kern hat den Brechungsindex n. Der Strahl wird durch die Brechung um den Winkel

$$\delta = \alpha - \beta \qquad (2)$$

von der Achse 4 des Lichtwellenleiters abgelenkt. Durch die Brechung ändert sich ein im Lichtwellenleiter zirkularer Strahl in einen Strahl mit elliptischem Querschnitt mit den Halbachsen $a_e$ und $b_e$ und dem Achsenverhältnis $V_e$ wobei gilt:

$$V_e = b_e/a_e = \cos \alpha / \cos \beta \qquad (3)$$

Durch Wahl des Schnittwinkels $\beta$ läßt sich auf diese Weise jedes beliebige Achsenverhältnis des Lichtbündels einstellen und mit (1) und (3) berechnen. Der Strahlengang muß dabei um den nach Gleichung (2) berechneten Winkel $\delta$ abgeknickt werden.

In der Tabelle sind einige berechnete Winkel und Achsenverhältnisse für eine Brechzahl von n = 1,45 im Kern des zirkularen Lichtwellenleiters aufgeführt.

| Schnittwinkel | Einfallsw. | Ablenkungsw. | Achsenverh. $V_e$ |
|---|---|---|---|
| $\beta$ ° | $\alpha$ ° | $\delta$ ° | $b_e/a_e$ |
| 0 | 0 | 0 | 1 |
| 8 | 11,6 | 3,6 | 0,989 |
| 10 | 14,6 | 4,6 | 0,982 |
| 12 | 17,6 | 5,6 | 0,975 |
| 15 | 22,0 | 7,0 | 0,960 |
| 20 | 29,7 | 9,7 | 0,924 |
| 25 | 37,8 | 12,8 | 0,872 |
| 30 | 46,5 | 16,5 | 0,795 |
| 35 | 56,3 | 21,3 | 0,678 |
| 36 | 58,5 | 22,5 | 0,647 |
| 37 | 60,8 | 23,8 | 0,612 |
| 38 | 63,2 | 25,2 | 0,579 |
| 39 | 65,9 | 26,9 | 0,526 |
| 40 | 68,8 | 28,8 | 0,473 |
| 41 | 72,0 | 31,2 | 0,409 |
| 42 | 76,0 | 34,0 | 0,325 |
| 42,8 | 80,4 | 37,6 | 0,226 |
| 43 | 81,5 | 38,5 | 0,203 |
| 43,5 | 86,5 | 43,0 | 0,085 |

Nach dem Stand der Technik ist es durchaus gebräuchlich, Fasern zur Vermeidung von Rückreflexionen mit einer schrägen Endfläche zu versehen und zum Ausgleich der Lichtbrechung unter einem Winkel $\delta$ zur Strahlrichtung einzubauen. Zur Vermeidung von Rückflexionen genügt schon ein verhältnismäßig kleiner Schrägwinkel $\beta$ von bis zu 12°. Bei so kleinen Winkeln ist die Änderung des Achsenverhältnisses, wie in der Tabelle ersichtlich, nur sehr gering und hat nahezu keinen Einfluß auf den Koppelwirkungsgrad. Erst im Schnittwinkelbereich von 30° bis 43° (für n=1,45) ist mit einer deutlichen Änderung des Achsenverhältnisses und damit mit einem erheblichen Einfluß auf den Koppelwirkungsgrad zu rechnen.

Bei dem Vorschlag zur Verbesserung des Koppelverhältnisses zwischen einem Halbleiterlaser mit elliptischem Modenfeld und einem Lichtwellenleiter mit zirkularem Modenfeld bzw. mit elliptischem Modenfeld mit anderem Achsverhältnis, wird anhand der oben angegebenen Gleichungen der zur Anpassung der Achsverhältnisse erforderliche Schnittwinkel des Lichtwellenleiters berechnet und die Achse des Lichtwellenleiters um den mit Hilfe der obigen Formel berechneten Winkel δ zur Strahlachse im Freiraum gekippt. Die Anpassung der nun ähnlichen Modenfeldellipsen auf gleiche Größe kann dann durch eine rotationssymmetrische Linse erfolgen Die Verbesserung der Lösung gegenüber dem Stand der Technik besteht darin, daß durch die schräge Stirnfläche eine Anpassung des Achsenverhältnisses möglich wird und so eine exakte Übereinstimmung der zu verkoppelnden Modenfelder erreicht werden kann.

Bei sehr kleinen Achsverhältnissen des Laser-Modenfeldes und entspechend großen Einfallswinkel α kann es erforderlich sein, die Endfläche 3 des Lichtwellenleiters mit einer Antireflexionsschicht zu versehen.

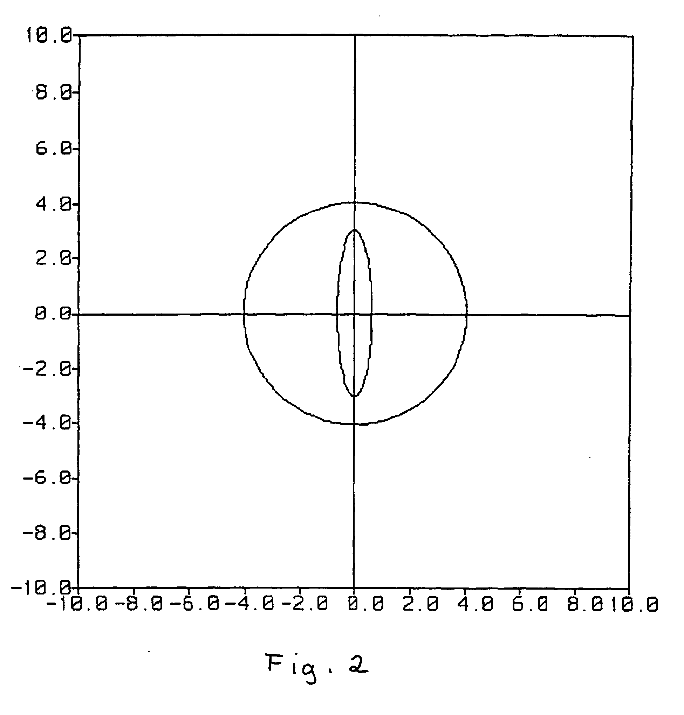

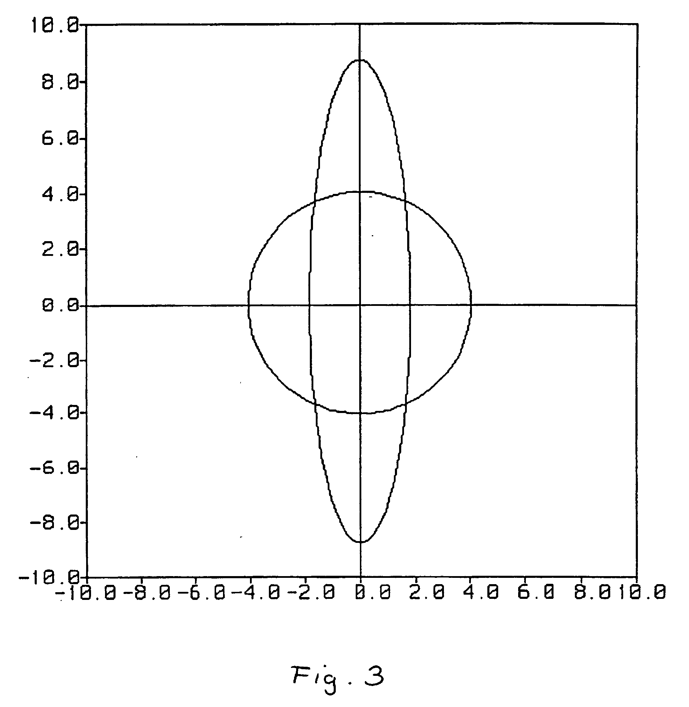

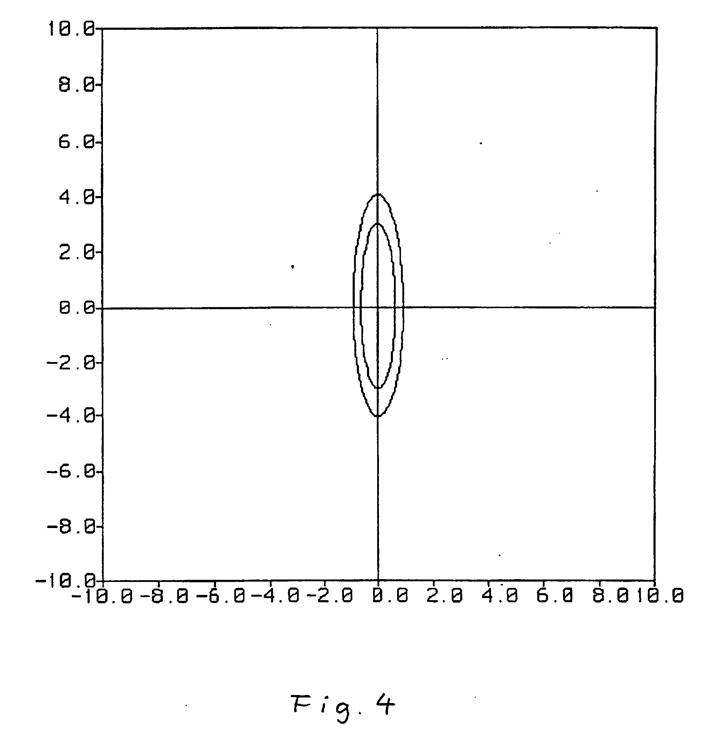

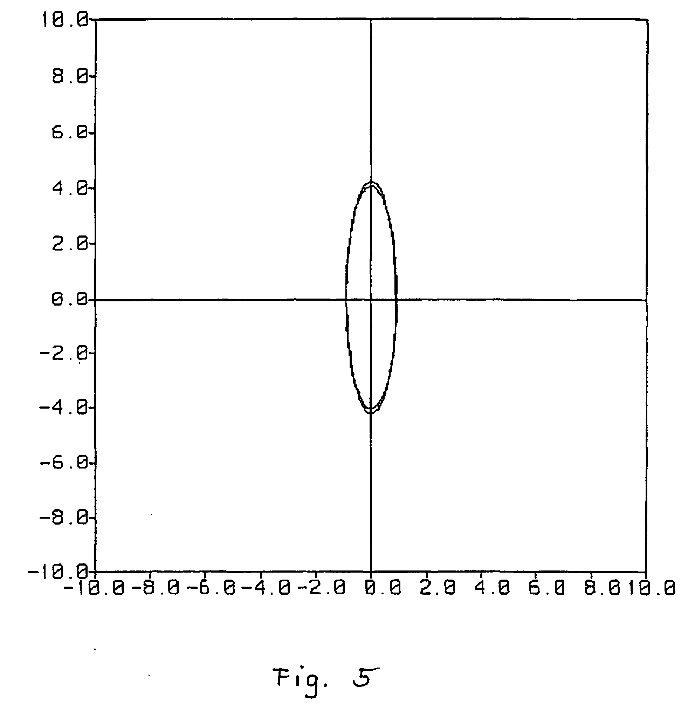

An einem Rechenbeispiel soll der Vorteil der erfindungsgemäßen Anordnung demonstriert werden. Für faseroptische Verstärker werden Pumplaser mit einer Wellenlänge von 980 nm benötigt, für die ein sehr hoher Koppelwirkungsgrad in die Faser verlangt wird. Solche Pumplaser haben aber ein Modenfeld mit einer sehr starken Elliptizität. Ein solcher Laser hat in einem extremen Fall ein Modenfeld mit einer großen Halbachse von $w_x = 0,63$ μm und einer kleinen Halbachse von $w_y = 3,02$ μm. Das Achsenverhältnis des Lasers ist $V_1 = 0,21$. Die Fernfeldwinkel (FWHM) sind 31° und 7°. Die Faser, in die das Licht eingekoppelt werden soll, hat einen Modenfeldradius von 4,05 μm. In Figur 2 sind die Modenfelder aufeinander gezeichnet. Das Überlappungsintegral der unveränderten Modenfelder läßt einen maximalen Koppelwirkungsgrad von 44,0 % erwarten. Nach dem Stand der Technik kann das Modenfeld des Lasers mit einer rotationssymmetrischen Linse vergrößert werden, wobei das Achsenverhältnis unverändert bleibt. Die optimale Vergrößerung hierfür ist M = 2,90. Das vergrößerte Modenfeld ist mit dem Modenfeld der Faser in Figur 3 dargestellt. Der maximal erreichbare Koppelwirkungsgrad beträgt 57,2 %, d.h. eine optimale Koppelanordnung nach dem Stand der Technik ergibt eine Koppelverbesserung um das 1,3fache. Formt man das zirkulare Modenfeld der Faser nach dem erfindungsgemäßen Vorschlag so um, daß das Achsenverhältnis dem des Lasers angepaßt ist, so erhält man die in Figur 4 dargestellten Modenfelder. Hier ergibt sich bereits ein Koppelwirkungsgrad von 89,6 %. Vergrößert man schließlich das Modenfeld des Lasers mit einer rotationssymmetrischen Linse um den Faktor M = 1,4, so erhält man die in Figur 5 dargestellten optimal aufeinander angepaßten Modenfelder. Das Überlappungsintegral der Modenfelder ergibt hier einen maximalerreichbaren Koppelwirkungsgrad 99,8 %. Die Koppelverbesserung beträgt hier das 2,3fache. Dies ist gegenüber einer optimalen Koppelanordnung nach dem Stand der Technik eine Verbesserung von 77%.

Zur Erzielung eines so hohen Koppelwirkungsgrades ist eine Antireflexions-Schicht auf der Faserstirnfläche erforderlich. Eine solche Schicht läßt sich nach dem Stand der Technik als Einfach- oder Mehrfachschicht herstellen. Bei der Auslegung der Schicht muß der verhältnismäßig große Einfallswinkel berücksichtigt werden. Erfahrungsgemäß bereiten sehr große Einfallswinkel bei der Berechnung von Schichten dadurch Schwierigkeiten, daß die optimale Schicht für Licht, das senkrecht zur Einfallsebene polarisiert ist anders ist, als die Schicht bei parallel zur Einfallsebene polarisiertes Licht. Bei einem Halbleiterlaser, der linear polarisiertes Licht mit der Schwingungsebene in Richtung der großen Halbachse der Modenfeld-Ellipse aussendet, ist das Licht senkrecht zur Einfallsebene der Faserstirnfläche polarisiert. Die Schicht muß daher nur für eine Polarisationsrichtung optimiert werden. Diese Optimierung läßt sich auch für große Einfallswinkel erreichen.

**Patentansprüche**

1.  Anordnung mit zwei aneinander gekoppelten optischen Komponenten, deren Lichtstrahlen unterschiedliche Feldverteilungen aufweisen,

      a) wobei die erste Komponente (1) ein Lichtwellenleiter ist, dessen Feldverteilung elliptisch ist und durch die Halbachsen $a_1$ und $b_1$ charakterisiert werden kann,
      b) wobei die Feldverteilung der zweiten Komponente ebenfalls elliptisch ist, und durch Halbachsen $a_3$ und $b_3$ charakterisiert werden kann,
      c) wobei die Lichtein- und Lichtaustrittsfläche (3) des Lichtwellenleiters (1) gegen seine Längsachse (4) geneigt ist und die Flächennormale (6) auf der Lichtein- bzw. Lichtaustrittsfläche (3) zur Längsachse (4) den Winkel β einschließt,
      d) wobei der Winkel β derart gewählt ist, dass die optische Achse eines zwischen den optischen Komponenten (1, ...) verlaufenden Strahls um den Winkel δ gegen die Längsachse der Lichtwellenleiters (1) geneigt ist, wobei

$$\delta = \alpha - \beta \neq 0 \text{ und } (\sin \alpha) / (\sin \beta) = n_1/n_2$$

      mit

$n_1$     Brechungsindex der ersten optischen Komponente (1),

$n_2$     Brechungsindex des Mediums zwischen den beiden op tischen Komponenten ,

$\alpha$     Winkel zwischen der optischen Achse (7), welche die beiden Komponenten miteinander verbindet, und der Flächennormalen (6) auf der Lichtein- oder Lichtaustrittsfläche (3),

**dadurch gekennzeichnet, dass** zwischen den beiden optischen Komponenten eine oder mehrere rotationssymmetrische Linsen mit einem Gesamtvergrößerungsfaktor d symmetrisch zur optischen Achse (7) angeordnet sind, wobei gilt:

$$a_3 / b_3 = a_1 (\cos \alpha) / b_1 \cos \beta$$

und

$$a_3 = d\, a_1 \cos \alpha$$

bzw.

$$b_3 = d\, b_1 \cos \beta.$$

2. Anordnung nach Anspruch 1, **dadurch gekennzeichnet, daß** die Feldverteilung der ersten optischen Komponente rotationssymmetrisch ist, $a_1 = b_1$ und somit

$$\frac{a_3}{b_3} = \frac{\cos \alpha}{\cos \beta}$$

3. Anordnung nach einem der Ansprüche 1 oder 2, **dadurch gekennzeichnet, daß** die Lichtein- bzw. Lichtaustrittsfläche (3) mit einer Antireflexionsbeschichtung versehen ist.

**Claims**

1. Arrangement having two optical components which are coupled to one another and the light beams of which have different field distributions,

   a) wherein the first component (1) is a light guide, the field distribution of which is elliptical and can be **characterised by** the semi-axes $a_1$ and $b_1$,
   b) wherein the field distribution of the second component is also elliptical and can be **characterised by** semi-axes $a_3$ and $b_3$,
   c) wherein the light-entry and light-exit surface (3) of the light guide (1) is inclined towards its longitudinal axis (4) and the surface normal (6) on the light-entry or light-exit surface (3) encloses the angle $\beta$ with respect to the longitudinal axis (4),
   d) wherein the angle $\beta$ is selected such that the optical axis of a beam extending between the optical components (1, ...) is inclined by the angle $\delta$ towards the longitudinal axis of the light guide (1), wherein

   $$\delta = \alpha - \beta \neq 0 \text{ and } (\sin \alpha) / (\sin (\beta)) = n_1/n_2$$

   with

   $n_1$     refractive index of the first optical component (1),
   $n_2$     refractive index of the medium between the two optical components,
   $\alpha$     angle between the optical axis (7) which connects the two components to one another, and the surface normal (6) on the light-entry or light-exit surface (3),

**characterised in that** between the two optical components one or more rotationally symmetrical lenses with an overall enlargement factor d is/are arranged symmetrically with respect to the optical axis (7), the following applying:

$$a_3 / b_3 = a_1 (\cos \alpha) / b_1 \cos \beta$$

and

$$a_3 = d\, a_1 \cos \alpha$$

or respectively

$$b_3 = d\, b_1 \cos \beta.$$

2. Arrangement according to claim 1, **characterised in that** the field distribution of the first optical component is rotationally symmetrical, $a_1 = b_1$ and thus

$$\frac{a_3}{b_3} = \frac{\cos \alpha}{\cos \beta}$$

3. Arrangement according to one of claims 1 or 2, **characterised in that** the light-entry or light-exit surface (3) is coated with an antireflection coating.

**Revendications**

1. Dispositif comportant deux composants optiques couplés l'un à l'autre et dont les rayons lumineux ont des répartitions de champs différentes, dans lequel

   a) le premier composant (1) est un guide de lumière dont la répartition de champ est elliptique **caractérisée par** les demi-axes ($a_1$, $b_1$),

   b) la répartition de champ du second composant est également elliptique, **caractérisée par** les demi-axes ($a_3$, $b_3$),

   c) la surface d'entrée et de sortie de lumière (3) du guide de lumière (1) est inclinée par rapport à son axe longitudinal (4) et la normale (6) à la surface d'entrée et de sortie de lumière (3) forme un angle ($\beta$) par rapport à l'axe longitudinal (4),

   d) l'angle ($\beta$) est choisi pour que l'axe optique d'un rayon passant entre les composants optiques (1...) soit incliné de l'angle ($\delta$) par rapport à l'axe longitudinal du guide de lumière (1),

   selon les relations :

$$\delta = \alpha - \beta \neq 0 \text{ et } (\sin \alpha) / (\sin \beta) = n_1/n_2$$

   dans lesquelles :

   ni est l'indice de réfraction du premier composant optique (1),

   $n_2$ est l'indice de réfraction du milieu entre les deux composants optiques,

   $\alpha$ est l'angle compris entre l'axe optique (7) reliant les deux composants et la normale (6) à la surface d'entrée et de sortie de lumière (3),

**caractérisé par**

une ou plusieurs lentilles symétriques en rotation entre les deux composants optiques, ayant un coefficient d'agrandissement global (d) symétrique par rapport à l'axe optique (7) selon les relations suivantes :

$$a_3 / b_3 = a_1 (\cos \alpha) / b_1 \cos \beta$$

et

$$a_3 = d\, a_1 \cos \alpha$$

ou respectivement

$$b_3 = d\, b_1 \cos \beta.$$

2. Dispositif selon la revendication 1,
   **caractérisé en ce que**
   la distribution du champ des premiers composants optiques est symétriques en rotation avec $a_1 = b_1$ et ainsi :

$$\frac{a_3}{b_3} = \frac{\cos \alpha}{\cos \beta}$$

3. Dispositif selon l'une des revendications 1 ou 2,
   **caractérisé en ce que**
   la surface d'entrée et de sortie de lumière (3) a un revêtement antiréfléchissant.

Fig. 1

EP 0 667 545 B1

Fig. 2

Fig. 3

Fig. 4

Fig. 5